# EUROPÄISCHE PATENTSCHRIFT

(11) **EP 3 684 015 B1**
(45) Veröffentlichungstag und Bekanntmachung des Hinweises auf die Patenterteilung: **03.01.2024**
(21) Anmeldenummer: 20150689.6
(22) Anmeldetag: 08.01.2020
(51) Int. Cl.: H04L 12/40

(54) **VORRICHTUNG UND VERFAHREN ZUR KLASSIFIZIERUNG VON DATEN INSBESONDERE FÜR EIN CONTROLLER AREA NETZWERK ODER EIN AUTOMOTIVE ETHERNET NETZWERK**
DEVICE AND METHOD FOR CLASSIFYING DATA IN PARTICULAR FOR A CONTROLLER AREA NETWORK OR AN AUTOMOTIVE ETHERNET NETWORK
DISPOSITIF ET PROCÉDÉ DE CLASSIFICATION DE DONNÉES, EN PARTICULIER POUR UN RÉSEAU DE ZONE DE CONTRÔLEUR OU UN RÉSEAU ETHERNET AUTOMOBILE

(30) Priorität: 17.01.2019 DE 102019200565
(43) Veröffentlichungstag der Anmeldung: 22.07.2020
(73) Patentinhaber: Robert Bosch GmbH, 70442 Stuttgart (DE)
(72) Erfinder: Junginger, Andrej, 70197 Stuttgart (DE); Dormann, Katharina, 69121 Heidelberg (DE); Hanselmann, Markus, 70563 Stuttgart (DE); Strauss, Thilo, 71636 Ludwigsburg (DE); Boblest, Sebastian, 73105 Duernau (DE); Ulmer, Holger, 89077 Ulm (DE); Buchner, Jens Stefan, 74321 Bietigheim-Bissingen (DE)

(56) Entgegenhaltungen:
- US-A1- 2007 043 539
- US-A1- 2018 262 327
- US-A1- 2018 337 938

## Beschreibung

### Stand der Technik

In Fahrzeugen werden Daten zwischen Steuergeräten über ein Controller Area Netzwerk oder ein Ethernet Netzwerk ausgetauscht.

Wünschenswert ist es, Anomalien in den über ein derartiges Netzwerk ausgetauschte Daten zuverlässig zu erkennen.

Die Druckschrift US 2018/0262327 A1 beschreibt ein Verfahren für den Betrieb eines Kommunikationsnetzwerks, das das durchsickern von Daten an einen Angreifer reduziert, der die durch das Kommunikationsnetzwerk übertragenen Signale beobachten kann.

Die Druckschrift US 2018/0337938 A1 beschreibt ein Verfahren zum Schutz eines Netzwerks gegen einen Cyberangriff bei dem für eine Nachricht im Netzwerk Merkmale und ein Ursprung bestimmt wird, welche mit einem Fingerabdruck des Netzwerks verglichen werden.

### Offenbarung der Erfindung

In vielen Fahrzeugen ist ein Controller Area Network insbesondere gemäß der Standardfamilie ISO 11898 verbaut. Dieses Netzwerk wird im Folgenden als CAN bezeichnet. CAN ist ein serielles Feldbussystem, das die Kommunikation von Mikrocontrollern, insbesondere Steuergeräten über einen CAN-Bus im Fahrzeug erlaubt. Der Datenverkehr auf dem CAN-Bus kann dabei grundsätzlich in zwei Gruppen unterteilt werden:
Normalverhalten:
   Das Normalverhalten beschreibt die Art der Daten wie sie im normalen Betrieb - d.h. ohne Fehler, Ausfälle, äußere Manipulationen o. Ä. - anfallen. In einem korrekt arbeitenden System treten nur fehlerfreie Daten auf und die einzelnen Daten hängen im Allgemeinen durch spezifische - sowohl stationäre als auch zeitliche - Korrelationen voneinander ab.
Anomalien:
   Aus verschiedenen Gründen können im realen Betrieb in den Daten des CAN Abweichungen vom Normalverhalten auftreten, die im Folgenden als Anomalie bezeichnet werden. Ursachen dafür können beispielsweise folgender Natur sein:
   (i) Defekte oder ganz ausgefallene Teilsysteme des CAN oder des Fahrzeugs liefern falsche oder gar keine Daten,
   (ii) Bauteile des CAN oder des Fahrzeugs sind beschädigt,
   (iii) das System wurde durch eine externe Quelle z. B. ein Hackerangriff manipuliert, dies wird im Folgenden als Intrusion bezeichnet.

Für automotive Ethernet Netzwerke insbesondere gemäße einem der Standards aus der IEEE 802.3 Standardfamilie, die zusätzlich oder statt CAN eingesetzt werden, wird im Folgenden dieselbe Unterteilung vorgenommen.

Für den sicheren Betrieb insbesondere von Fahrzeugen ist es von hoher Bedeutung, solche Anomalien in derartigen Daten zu erkennen. Die Daten werden in Nachrichten über das Netzwerk gesendet. Diese Nachrichten sind in Nachrichtentypen des verwendeten Kommunikationstyps unterteilt. Beispielsweise ist bei CAN jeder CAN ID ein Nachrichtentyp zugeordnet.

Netzwerkverkehr mit Machine Learning Methoden, insbesondere künstlichen neuronale Netzen beispielsweise mittels Deep Learning zu überwachen, stellt eine große Herausforderung dar, da eine große Variabilität in den
Daten vorherrscht. So ist es bei CAN beispielsweise nicht vordefiniert, welche Nachrichten mit welchen CAN IDs aufeinander folgen. Die Reihenfolge, in der Nachrichten mit den CAN IDs gesendet werden hängt nicht ausschließlich von deren Zykluszeit ab, sondern von vielen weiteren Faktoren, wie beispielsweise den Zeitpunkt zu dem das zugehörige Steuergerät im Startvorgang des Fahrzeugs sendebereit wird, ob aktuell Nachrichten mit CAN IDs mit einer höheren Priorität gesendet werden oder auch der Übertragungsrate des CAN-Busses. Dies führt zu einem hochgradig dynamischen und komplexen zeitlichen Verlauf des Datenstroms. Neben dieser zeitlichen Variabilität ist auch eine hohe Variabilität in den Daten, die die Nachrichten enthalten, selbst gegeben. So umfassen Nachrichten mit unterschiedlichen CAN IDs unterschiedlich viele Signale.

Noch signifikanter wird die Datenvariabilität, wenn man insbesondere automotive Ethernet betrachtet, bei dem mit unterschiedlichen Protokolltypen umgegangen werden muss, die ihrerseits stark in der Datenstruktur abweichen können.

Für den Einsatz von künstlichen neuronalen Netzen für Netzwerkdaten ergeben sich damit grundlegend zwei Probleme: Zum einen macht die zeitliche Variabilität den Einsatz von rekurrenten künstlichen neuronalen Netzen, die speziell für den Einsatz mit insbesondere zeitlich geordneten Daten geeignet sind, problematisch, da es für derartige Netze ein sehr schwieriges Problem ist, den zeitlichen Ablauf von Nachrichten mit unterschiedlichen CAN IDs zu erlernen, da dieser in verschiedenen Situationen zwar jeweils valide, aber sehr unterschiedlich strukturiert sein kann. Zum anderen erwarten künstliche neuronale Netze bei jeder Eingabe von Daten dieselbe Datenstruktur.

In einem Aspekt ist ein computerimplementiertes Verfahren zur Anomalieerkennung gemäß dem Anspruch 1 vorgesehen. Durch diese Architektur des künstlichen neuronalen Netzes, die speziell auf Netzwerkverkehr im überwachten Kommunikationsnetzwerk zugeschnitten ist, wird sowohl das Problem der zeitlichen als auch der datenspezifischen Variabilität gelöst. Anstelle sich darauf zu beschränken, nur einige wenige der empfangenen Nachtrichten auszuwählen, für die das künstliche neuronale Netzwerk insgesamt trainiert ist, wird so eine Nachricht abhängig von ihrem Nachrichtentyp einem für diesen Nachrichtentyp spezifizierten Eingabemodell zugeordnet. Das künstliche neuronale Netz insbesondere für das Eingabemodell kann hierdurch vergleichsweise klein gehalten werden. Dies ist insbesondere für den Einsatz auf Embedded Devices interessant. Mit Hilfe der neuronalen Netzwerkarchitektur kann ein verbessertes Intrusion Detection System, aufgebaut und/oder konfiguriert werden. Ein Intrusion Detection System wird im Folgenden mit IDS bezeichnet. Das vorgestellte Verfahren kann hierbei unüberwacht trainiert werden, das heißt, dass für das Training nur hinreichend viele Normaldaten vorliegen müssen, aber keine Anomalien oder Intrusions. Dennoch ist das trainierte System dann in der Lage, neue und zuvor nicht bekannte Anomalien zu detektieren. Im Vergleich zu einem regelbasierten IDS ergibt sich der Vorteil, dass das System automatisch an Hand der Trainingsdaten möglicherweise latente Zusammenhänge des Netzwerkverkehrs erlernen kann. Dadurch wird es einem Angreifer deutlich erschwert oder unmöglich gemacht, das System erfolgreich anzugreifen, da der Angreifer - um das IDS zu täuschen - auch die funktionalen Zusammenhänge des Systems im Angriff abbilden müsste. Beispielsweise wird immer dann, wenn ein relevanter Nachrichtentyp im Netzwerk gesendet wird, dieser durch das künstliche neuronale Netz propagiert. Dies ermöglicht es, zu jedem Zeitschritt eine Prädiktion zu berechnen und somit Anomalien zeitnah zu erkennen. Es kann insbesondere vorgesehen sein, dass neben der ersten und der zweiten Eingangsgröße weitere Größen in die Berechnung, ob eine Anomalie vorliegt, mit eingehen, wie beispielsweise vorangegangene Vergleiche von Vorhersage und der jeweilig zweiten Eingangsgröße. Damit sind Anomalien unabhängig von einem regelbasierten IDS zuverlässig erkennbar.

Vorteilhafterweise ist vorgesehen, dass das künstliche neuronale Netz trainiert ist, abhängig von zumindest einem Teil eines Netzwerkverkehrs im Kommunikationsnetzwerk zu ermöglichen, zu entscheiden, in welchen Zustand von einer Vielzahl von möglichen Zuständen sich das Kommunikationsnetzwerk mit gegenüber den anderen möglichen Zuständen höherer Wahrscheinlichkeit befindet. Dies ermöglicht eine effiziente Klassifizierung in einen von vielen möglichen Zuständen. Beispielsweise wird im Verfahren ein neuronales Netz verwendet, das ausgehend von Netzwerkverkehr ermöglicht, zu entscheiden, in welchem der Zustände sich das Netzwerk befindet. Ein solches Klassifikationsproblem wird in dieser neuronalen Netzwerkarchitektur leicht gelernt indem der Ausgabebereich an das Klassifikationsproblem adaptiert wird und im Training eine geeignete Verlustfunktion angesetzt wird. Das Verfahren mit dieser neuronalen Netzwerkarchitektur ist nicht nur für ein IDS geeignet, sondern auch für viele weitere Anwendungen, die beim Umgang mit Netzwerkverkehr angesetzt werden können. Beispielsweise ist Preemptive Maintenance ein mögliches Anwendungsgebiet für das Verfahren mit dieser Netzwerkarchitektur.

Vorteilhafterweise ist vorgesehen, dass eine Vielzahl Nachrichten abhängig von einer Vielzahl vorgegebener Netzwerktypen als Eingangsgröße für eine Vielzahl Eingabemodelle ausgewählt werden, wobei ein Nachrichtentyp eindeutig eines der Vielzahl Eingabemodelle zugeordnet ist, wobei Ausgaben der Vielzahl Eingabemodelle als eine Eingabe für den Ausgabebereich aggregiert werden. Dies ermöglicht ein selektives Daten-Preprocessing abhängig vom Nachrichtentyp.

Vorteilhafterweise ist vorgesehen, dass Zustände der Vielzahl Eingabemodelle aggregiert werden, insbesondere durch Konkatenation der Zustände auf einen Vektor. Diese Aggregation ist besonders effizient.

Vorteilhafterweise ist vorgesehen, dass das Ergebnis abhängig von einem Maß für eine Abweichung der Vorhersage von der zweiten Eingangsgröße definiert ist, wobei das Kriterium durch einen Schwellwert für die Abweichung definiert ist, wobei eine Anomalie erkannt wird, wenn das Maß für die Abweichung den Schwellwert überschreitet. Dies erhöht die Robustheit der Anomalieerkennung.

Gemäß dem Anspruch 7 ist eine entsprechende Vorrichtung zur Anomalieerkennung vorgesehen. Diese Vorrichtung ist speziell auf Netzwerkverkehr im Kommunikationsnetzwerk zugeschnitten. Das künstliche neuronale Netz kann hierdurch vergleichsweise klein gehalten werden. Die Vorrichtung ist insbesondere für den Einsatz auf einem Embedded Device ausgestaltet. Damit erkennt die Vorrichtung Anomalien besonders effizient.

Vorteilhafterweise ist vorgesehen, dass das künstliche neuronale Netzwerk der Vorrichtung trainiert ist, abhängig von zumindest einem Teil eines Netzwerkverkehrs im Kommunikationsnetzwerk zu ermöglichen, zu entscheiden, in welchen Zustand von einer Vielzahl von möglichen Zuständen sich das Kommunikationsnetzwerk mit gegenüber den anderen möglichen Zuständen höherer Wahrscheinlichkeit befindet. Dies ermöglicht einen vielfältigen Einsatz der Vorrichtung.

Vorzugsweise ist vorgesehen, dass die Vorrichtung eine Vielzahl Eingabemodelle umfasst, wobei zwischen der Vielzahl Eingabemodelle und dem Ausgabebereich ein insbesondere als künstliches neuronales Netz ausgebildeter Aggregationsteil angeordnet ist, der ausgebildet ist, Ausgaben der Vielzahl Eingabemodelle als eine Eingabe für den Ausgabebereich zu aggregieren. Die Vorrichtung bietet damit eine vielseitige Schnittstelle für Daten-Preprocessing einer Vielzahl von Nachrichtentypen in unterschiedlichen Eingabemodellen, deren Ausgang für die Klassifikation gemeinsam verwendet wird.

Vorzugsweise ist vorgesehen, dass der Aggregationsteil ausgebildet ist, Zustände der Vielzahl Eingabemodelle zu aggregieren, insbesondere durch Konkatenation der Zustände auf einen Vektor. Dies stellt eine besonders effektive Zusammenfassung der Information der Eingangsmodelle insbesondere in einem Embedded Device mit beschränkten Rechenressourcen dar.

Vorzugsweise ist vorgesehen, dass das Ergebnis abhängig von einem Maß für eine Abweichung der Vorhersage von der zweiten Eingangsgröße definiert ist, wobei das Kriterium durch einen Schwellwert für die Abweichung definiert ist, wobei die Vorrichtung ausgebildet ist, eine Anomalie zu erkennen, wenn das Maß für die Abweichung den Schwellwert überschreitet. Das Maß kann auch von weiteren Größen abhängen. Damit wird die Anomalieerkennung durch die Vorrichtung besonders robust.

Ein Aspekt der Offenbarung ist ein Trainingsverfahren für ein künstliches neuronales Netz zur Anomalieerkennung. Dieser Machine-Learning Ansatz arbeitet auf einer großen Menge Nachrichten, beispielsweise CAN-Signale. Es ist insbesondere nicht erforderlich sich darauf zu beschränken, einige wenige Nachrichten, beispielsweise CAN-Signale aus dem Trace vorzuselektieren.

Ein Aspekt der Offenbarung sieht vor, dass eine Vielzahl Nachrichten abhängig von einer Vielzahl vorgegebener Nachrichtentypen als Eingangsgröße für eine Vielzahl Eingabemodelle ausgewählt werden, wobei ein Nachrichtentyp eindeutig eines der Vielzahl Eingabemodelle zugeordnet ist, wobei Ausgaben der Vielzahl Eingabemodelle als eine Eingabe für den Ausgabebereich aggregiert werden. Dieser Machine-Learning Ansatz arbeitet mit Eingangsmodellen, die einem bestimmten Nachrichtentyp eindeutig zugeordnet sind.

Ein Aspekt der Offenbarung sieht vor, dass Zustände der Vielzahl Eingabemodelle aggregiert werden, insbesondere durch Konkatenation der Zustände auf einen Vektor oder Tensor. Dies ermöglicht ein besonders effizientes Berechnen der Vorhersagen im Training.

Ein Aspekt der Offenbarung sieht alternativ vor, dass eine Vielzahl Eingabemodelle über mehrere Zeitschritte Daten aggregieren, und insbesondere vorverarbeiten bevor im Ausgabebereich ein Auswertungsschritt stattfindet, wobei die Vorhersage bestimmt wird. Die Alternative kann z.B. dann interessant sein, wenn nur begrenzte Ressourcen zur Verfügung stehen und der, vergleichsweise teure, d.h. rechenzeit- oder rechenressourcenaufwändige Schritt der Aggregation und des Ausgabeteils nur selten durchgeführt werden soll.

Ein Aspekt der Offenbarung sieht vor, dass die erste Eingangsgröße für einen ersten Zeitschritt ausgewählt wird, wobei abhängig von der ersten Eingangsgröße die Rekonstruktion für die erste Eingangsgröße für den ersten Zeitschritt bestimmt wird. Damit wird das künstliche neuronale Netzwerk besonders effektiv hinsichtlich Abweichungen der Nachrichten von der Rekonstruktion trainiert.

Ein Aspekt der Offenbarung sieht alternativ vor, dass eine Vielzahl Eingabemodelle über mehrere Zeitschritte Daten aggregieren, und insbesondere vorverarbeiten bevor im Ausgabebereich ein Auswertungsschritt stattfindet, wobei die Rekonstruktion bestimmt wird. Die Alternative kann z.B. dann interessant sein, wenn nur begrenzte Ressourcen zur Verfügung stehen.

Ein Aspekt der Offenbarung sieht vor, dass das Training unüberwacht, insbesondere nur mittels Daten erfolgt, die ein Normalverhalten des Kommunikationsnetzwerks definieren. Ein aus diesem Training resultierendes Intrusion Detection System ist nur durch Daten konfiguriert, die das Normalverhalten beschreiben. Abweichungen von diesem Normalverhalten werden als von diesem Intrusion Detection System als Angriff klassifiziert, wodurch das System in der Lage ist, auch unbekannte Attacken zu detektieren.

Weitere vorteilhafte Ausgestaltungen ergeben sich aus der folgenden Beschreibung und der Zeichnung. In der Zeichnung zeigt:
Fig. 1 eine schematische Darstellung von Teilen einer Vorrichtung zur Klassifizierung von Daten,
Fig. 2 eine schematische Darstellung von Teilen eines Kommunikationsnetzwerks,
Fig. 3 eine schematische Darstellung eines Ablaufdiagramms und einer neuronalen Netzarchitektur,
Fig. 4 eine schematische Darstellung eines CAN Traces,
Fig. 5 eine schematische Darstellung eines Verfahrens zur Klassifizierung von Daten,
Fig. 6 eine schematische Darstellung eines Trainingsverfahrens.

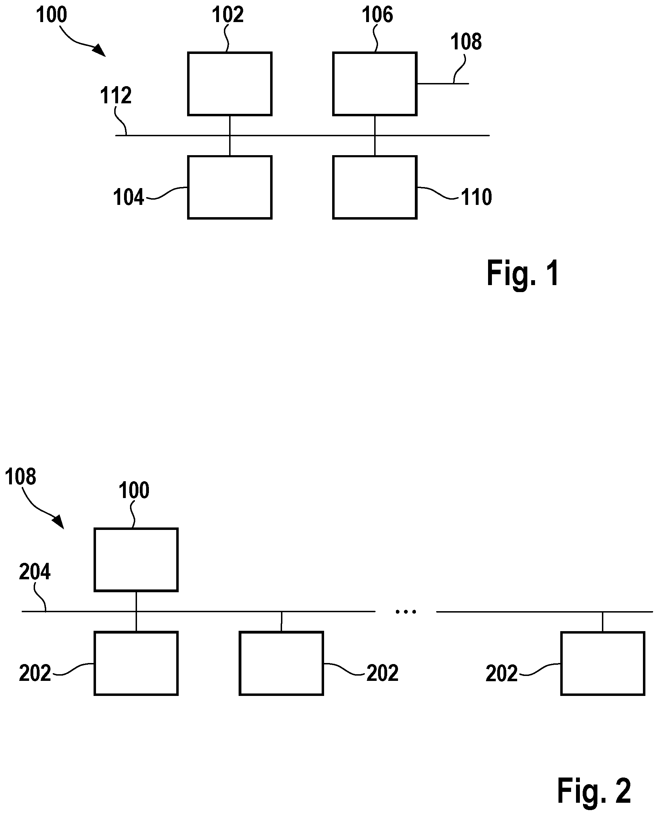

In Figur 1 ist eine Vorrichtung 100 zur Klassifizierung von Daten schematisch dargestellt.

Die Vorrichtung 100 ist im Beispiel ein Embedded Device. Die Vorrichtung 100 umfasst einen Prozessor 102, einen Arbeitsspeicher 104, eine Schnittstelle 106 für ein Kommunikationsnetzwerk 108 und einen nicht-flüchtigen Speicher 110. Diese sind ausgebildet, über einen Bus 112 oder eine andere Datenleitung zu kommunizieren.

Figur 2 stellt Teile des Kommunikationsnetzwerks 108 schematisch dar, in dem die Vorrichtung 100 und mehrere Steuergeräte 202 an einer Datenleitung 204 angeordnet sind. Die Datenleitung 204 ist im Beispiel ein CAN-Bus kann aber auch zusätzlich eine automotive Ethernet Verbindung umfassen oder alternativ ein automotive Ethernet Verbindung sein.

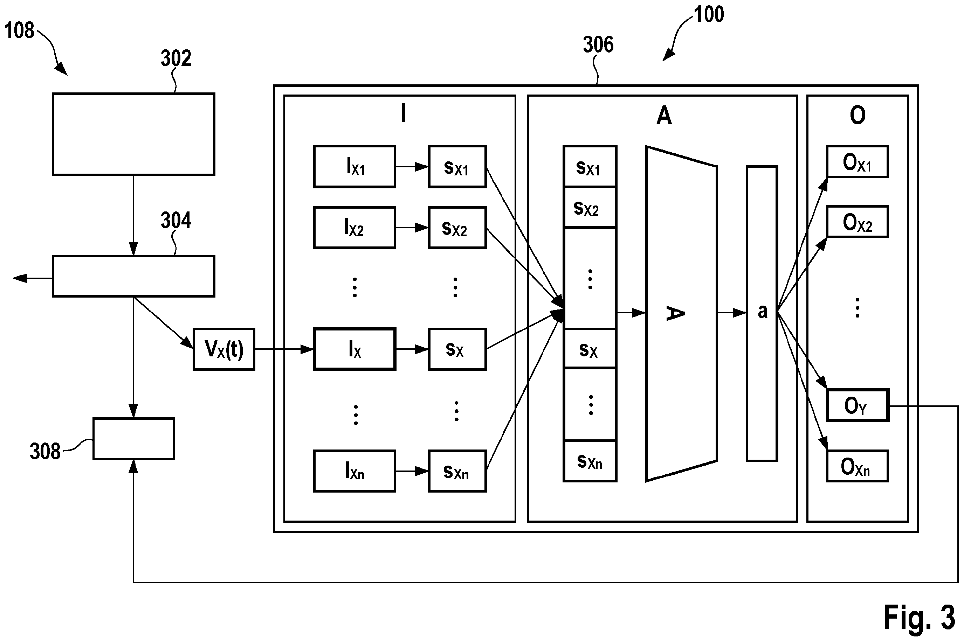

In Figur 3 ist eine schematische Darstellung eines Ablaufdiagramms und einer neuronalen Netzarchitektur wiedergegeben. Diese geht von einem CAN aus, ist jedoch auch für automotive Ethernet entsprechend anwendbar. Die Vorrichtung 100 ist zur Klassifizierung von Daten im Kommunikationsnetzwerk 108, insbesondere für CAN oder ein automotive Ethernet Netzwerk ausgebildet.

Die Vorrichtung 100 umfasste einen Eingang 302 für eine Nachricht oder mehrere Nachrichten aus dem Kommunikationsnetzwerk 108. Im Beispiel wird am Eingang ein CAN Trace bereitgestellt.

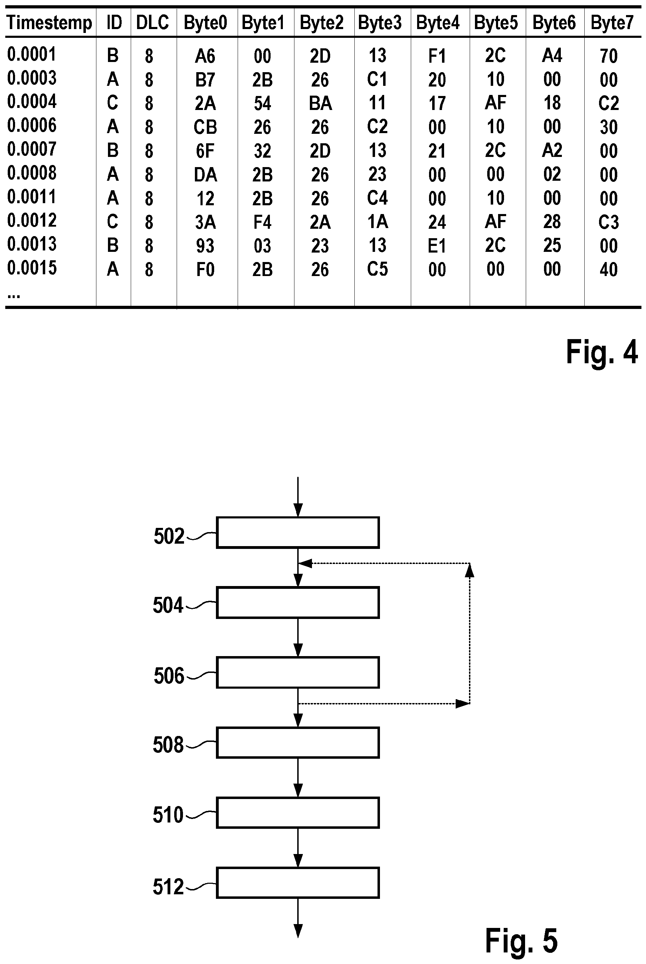

Ein CAN Trace beinhaltet eine Vielzahl Nachrichten unterschiedlicher Nachrichtentypen, die anhand ihrer CAN ID unterscheidbar sind. Ein beispielhaftes CAN Trace ist in Figur 4 dargestellt.

In Figur 4 ist schematisch eine Aufzeichnung eines CAN-Traces dargestellt. Die in Figur 4 dargestellte Aufzeichnung enthält wichtige jedoch nicht alle möglichen Inhalte eines CAN-Traces. Die Daten, die eine Nachricht umfasst, sind in Figur 4 in einer Zeile angeordnet. Insbesondere wird zu jedem in Figur 4 mit Timestamp bezeichneten Zeitpunkt, zu dem eine Nachricht, d.h. ein CAN-Frame, empfangen wird, eine in Figur 4 mit ID bezeichnete Kennung dieser Nachricht, die CAN ID, übermittelt. Des Weiteren wird ein sogenannter Payload gesendet, der in diesem Beispiel aus acht Bytes besteht, die hexadezimal codiert sind. Der Data Length Code, in Figur 4 mit DLC bezeichnet, gibt an, wie lange die Nachricht ist.

In Figur 4 sind die an ihrer CAN ID zu erkennenden Nachrichtentypen A, B, C vorgesehen.

Die Vorrichtung 100 umfasst eine Auswahleinrichtung 304, die ausgebildet ist eine Nachricht anhand ihres Nachrichtentyps zu erkennen und einem im Folgenden beschrieben Daten-Preprocessing zuzuordnen. Die Auswahleinrichtung 304 ist ausgebildet, eine Nachricht aus dem Kommunikationsnetzwerk 108, die einen vorgegebenen Nachrichtentyp X aufweist, für eine erste Eingangsgröße vx auszuwählen.

Pro CAN ID können im Beispiel in den acht Bytes des Payloads unterschiedlich viele Signale codiert sein. Aus einer data base CAN Datei, bekannt als DBC-File, ist extrahierbar, welche Bits in welcher Weise zu diesen Signalen zusammengefasst werden. Beim Daten-Preprocessing wird beispielsweise eine Teilmenge der Signale oder alle aus dem Payload extrahiert, ggf. normalisiert oder anderweitig weiterverarbeitet. Neben den Signalen können auch weitere Informationen aus dem CAN-Frame extrahiert werden. Z.B. ist der Timestamp geeignet als Eingangsgröße für das neuronale Netz transformiert zu werden oder eine Kennung des Busses, auf dem die Nachricht gesendet wird. Ebenso ist es möglich, die Bytes direkt als Eingangsgrößen zu verwenden.

Bei anderen Netzwerktypen, bei denen es kategorische Daten, wie beispielsweise eine Media Access Controll Adresse, bekannt als MAC-Adresse, gibt, können diese beispielsweise per "1-Hot-Encoding" oder einer geeigneten anderen Codierung vorverarbeitet werden.

Für jede CAN ID oder allgemein für jeden übertragenen Nachrichtentyp des Kommunikationsnetzwerkes 108 wird damit ein Daten-Preprocessing Schritt definiert, so dass für einen Nachrichtentyp X zu jedem Zeitschritt t, an dem der Nachrichtentyp X beobachtet wird, ein Inputvektor vx(t) aufgebaut wird, der aus numerischen Werten besteht und dessen Dimensionalität zu jedem Zeitschritt, zu dem X auftritt, dieselbe ist.

Ein neuer Zeitschritt t + 1 folgt beispielsweise auf den Zeitschritt t wann immer eine neue Nachricht auf dem Kommunikationsnetzwerk 108 empfangen wird. Wenn ein CAN-Trace bereits vorliegt, in dem mehrere Nachrichten enthalten sind, gibt der Timestamp die Reihenfolge an, in der die Nachrichten auf dem Kommunikationsnetzwerk 108 empfangen wurden.

Für jeden Nachrichtentyp X wird ein separates Eingangsmodell verwendet. Dieser Ansatz löst das Problem der hohen Datenvariabilität. Optional kann nur eine Teilmenge aller auftretenden Nachrichtentypen X betrachtet werden.

Im Folgenden bezeichnet N die Menge aller relevanten Nachrichtentypen X und n die Anzahl ihrer Elemente.

Die Vorrichtung 100 umfasst ein künstliches neuronales Netz 306. Das künstliche neuronale Netz 306 umfasst einen Eingangsbereich I, eine optionale Aggregationsteil A und einen Ausgabebereich O.

Im Folgenden wird ein Überblick über die Netzarchitektur eines beispielshaften Modells beschrieben.

Im Beispiel wird für alle X ∈ N ein Eingabemodell Ix verwendet. Nur wenn im Netzwerkverkehr zum Zeitschritt t der Nachrichtentyp X beobachtet wird, wird vx(t) in das Eingabemodell Ix als Input eingespeist. Dieser Ansatz löst das Problem der hohen zeitlichen Variabilität von Netzwerkdaten.

Ist Ix beispielsweise über eine rekurrente neuronale Netzwerkstruktur realisiert, wird hierdurch ermöglicht, dass der interne Status des Netzes immer nur dann ein Update erfährt, wenn die jeweilige ID auch wirklich auftritt.

Zur Anomalieerkennung ist vorgesehen, dass das Gesamtnetzwerk M zu jedem Zeitschritt t in der Lage ist, für alle X ∈ N eine Vorhersage vx'(t + 1) für vx(t + 1) treffen zu können.

Alternativ kann es von Vorteil sein, nur für eine Teilmenge der Werte eine Vorhersage zu treffen. Die Netzwerkarchitektur ist damit problemspezifisch anpassbar.

Für die Vorhersage ist das künstliche neuronale Netzwerk so ausgestaltet, dass es möglich ist, die Ausgänge von allen Eingabenetzen Ix zu verwenden. Dies hat den Vorteil, dass für die Prädiktion alle internen States verwendet werden können, wodurch auch funktionale Abhängigkeiten in die Prädiktion einfließen.

Zum Zeitschritt t + 1 wird überprüft, welcher Nachrichtentyp X tatsächlich gesendet wurde.

Ist dies X e N, wird die Vorhersage vx' (t + 1) mit dem tatsächlichen Wert vx (t + 1) verglichen.

Eine Abweichung zwischen Vorhersage vx' (t + 1) und tatsächlichem Wert vx (t + 1) geht in ein Fehlermaß ein. Das Fehlermaß wird im Beispiel dazu verwendet, einen Anomaliescore zu berechnen.

Das künstliche neuronale Netz 306 umfasst im der Eingangsbereich I wenigstens ein Eingabemodell Ix. Das Eingabemodell Ix ist der ersten Eingangsgröße vx zugeordnet. Die erste Eingangsgröße vx stellt im Beispiel eine Nachricht im Kommunikationsnetzwerk 108 dar, die zu klassifizierende Daten enthält. Die erste Eingangsgröße vₓ codiert die Daten der Nachricht im Beispiel als Vektor.

Im Beispiel sind eine Vielzahl Nachrichtentypen, eine Vielzahl Eingangsgrößen v_{X1}, ..., v_{Xn} und eine Vielzahl Eingabemodelle I_{X1}, ... I_{Xn} vorgesehen. Diese werden im Beispiel von der Auswahleinrichtung 304 abhängig von ihrem Nachrichtentyp unterschiedlichen Eingangsgrößen eindeutig zugeordnet.

Ein aktueller Zustand sx des Eingabemodells Ix wird im Beispiel als Eingang sx dem optionalen Aggregationsteil A übergeben. Genauer wird die Vielzahl der aktuellen Zustände s_{X1}, ... s_{Xn} der Vielzahl der Eingabemodelle I_{X1}, ..., I_{Xn} an die Aggregationsteil A übergeben. Aus der Vielzahl der Zustände s_{X1}, ... s_{Xn} wird durch die Aggregationsteil A ein Ausgang a als Eingang des Ausgabebereichs O erzeugt. Der Ausgang a ist im Beispiel ein Vektor, der durch Konkatenation der Vielzahl der aktuellen Zustände s_{X1}, ... s_{Xn} erzeugt wird.

Es kann auch vorgesehen sein, dass die Aggregationsteil A die Vielzahl der aktuellen Zustände s_{X1}, ... s_{Xn} bei Bedarf, ggf. über eine neuronale Netzstruktur weiterverarbeitet.

Anstelle der Aggregation kann auch vorgesehen sein, die Vielzahl der aktuellen Zustände s_{X1}, ... s_{Xn} direkt als Eingang für den Ausgabebereich O zu verwenden.

Das künstliche neuronale Netz 306 umfasst im Ausgabebereich O wenigstens ein Ausgangsmodell O_{Y}. Aufgabe des Ausgangsmodells O_{Y} ist es, zu jedem Zeitpunkt t eine Vorhersage v_{Y'} (t+1) für v_{Y}(t + 1) zu bestimmen, um diese mit v_{Y}(t + 1) zu vergleichen, wenn zum Zeitpunkt t+1 ein Nachrichtentyp Y auftritt. Im Beispiel gibt es zu der Vielzahl von Eingangsgrößen v_{X1}, ..., v_{Xn} jeweils ein Ausgangsmodell O_{X1}, ... O_{Xn}. Der ersten Eingangsgröße vx ist im Beispiel das Ausgangsmodell Ox eindeutig zugeordnet. Genauer sind der Vielzahl Eingangsgrößen v_{X1}, ..., v_{Xn} die Vielzahl Ausgangsmodelle O_{X1}, ... O_{Xn} eindeutig zugeordnet.

Der Ausgabebereich O ist ausgebildet, eine Vorhersage vx' für eine Klassifizierung der Nachricht abhängig von der ersten Eingangsgröße vx auszugeben. Der Ausgabebereich O liefert anhand der Daten, die der Aggregationsteil A liefert, eine Prädiktion für den Folgezeitschritt.

Das Ausgangsmodell O_{Y} stellt zum Zeitpunkt t eine Vorhersage v_{Y}'(t+1) für eine auf die Eingangsgröße vx(t) folgende zweite Eingangsgröße vx(t+1) dar.

Bei der Auswertung eines Zeitschritts t ist sowohl in einer Auswertungs- als auch in einer Trainingsphase in eine Vorwärtspropagation eines Inputs vorgesehen.

In einer einfachsten Ausführungsform sind die Vielzahl Eingabemodelle I_{X1}, ... I_{Xn} des Eingangsbereichs I als rekurrente neuronale Netze realisiert, beispielsweise über Long short-term memoris, LSTMs, Gated recurrent units, GRUs, Vanillarecurrent neural networks, RNNs oder auch Time Continuous RNNs.

Prinzipiell sind hier jegliche Freiheiten hinsichtlich der Ausgestaltung der Netzwerkarchitektur gegeben. Beispielsweise können tiefe künstliche neuronale Netze verwendet werden und für verschiedene Nachrichtentypen bei Bedarf auch unterschiedliche Architekturen jeglicher Art verwenden. Hier kann auf die breite Vielfalt von Netzwerkarchitekturen zurückgegriffen werden. Als Eingang erhält das Eingangsmodell Ix die Eingangsgröße vx in einer Form, die entsprechend der Spezifikation des Eingangsmodells Ix verarbeitbar ist, um den Ausgang sx zu erzeugen.

Die Dimensionalität des Ausgang sx ist für jedes Eingabemodell Ix frei vorgebbar. In einem Zeitschritt t wird der Ausgang sx des Eingabemodells Ix gespeichert. Im Falle, dass man für das Eingabemodell Ix einfache LSTMs verwendet, ist dies der sogenannte "Hidden State" der in der Literatur meist mit ht bezeichnet wird.

Im Beispiel wird mit sx auch der aktuelle Zustand des Eingabemodells Ix bezeichnet. Nachdem zu einem Zeitschritt t und dem Auftreten einer Nachricht X das Eingangsmodell Ix den Zustand sx = sx (vx (t)) aktualisiert hat, aggregiert der Aggregationsteil A von allen X ∈ N die aktuellen Zustände sx.

Optional kann eine Weiterverarbeitung erfolgen, indem beispielsweise die so aggregierten Daten einem künstlichen neuronalen Netz zugeführt werden. Die Ausgabe a des Aggregationsteil A ist beispielsweise ein Vektor oder Tensor, der im Beispiel zu jedem Zeitpunkt dieselbe Dimensionalität hat. Unabhängig davon welcher Nachrichtentyp zum aktuellen Zeitschritt t auftritt und wann die anderen Nachrichtentypen das letzte Mal auftraten, beinhaltet die Ausgabe a, d.h. der Vektor oder Tensor somit Informationen über alle aktuellen States der einzelnen Nachrichtentypen.

Aufgabe des Ausgabebereichs O ist es zum Zeitschritt t für jedes X ∈ N die Prädiktion vx'(t+1) insbesondere für alle zuvor festgelegten relevanten Größen zu erstellen, die angibt, was das Modell erwartet, sollte zum Zeitschritt t + 1 Nachrichtentyp X auftreten.

Um dies zu erreichen, können wiederum viele verschiedene Netzwerkarchitekturen angesetzt werden. Um eine möglichst schlanke künstliche neuronale Netzwerkarchitektur zu erlangen, wird beispielsweise für jedes X ∈ N ein eigenes Ausgangsmodell Ox verwendet. Im einfachsten Fall kann dies als Fully Connected insbesondere tiefes künstliches neuronales Netzwerk realisiert sein. Die neuronale Netzwerkarchitektur kann auch hier nach Bedarf und ggf. pro Nachrichtentyp separat ausgebildet werden.

Als Eingang erhält das Ausgangsmodell Ox die Ausgabe a des Aggregationsteils A. Als Ausgabe generiert das Ausgangsmodell Ox im Beispiel einen Vektor ox = v_{X}'(t+1), der dieselbe Struktur wie v_{X}(t) aufweist.

Die Unterteilung in eine Vielzahl Ausgangsmodelle O_{X1}, ... O_{Xn} ist nur eine von vielen möglichen Realisierungen des Ausgabebereichs O. Diese hat den Vorteil, dass sie zum einen mit möglichst wenigen Parametern auskommt und andererseits damit auch eine schnelle Auswertung ermöglicht. Genauso ist es beispielsweise denkbar, die Ausgabe a in ein einziges neuronales Netzwerk einzuspeisen und den gewünschten Ausgang des Ausgabebereichs O zu generieren.

Die Vorrichtung 100 umfasst in einem Aspekt eine Vergleichseinrichtung 308. Die Vergleichseinrichtung 308 ist ausgebildet, abhängig von einem Ergebnis eines Vergleichs von der zweiten Eingangsgröße vx(t+1) und der Vorhersage vx'(t+1) eine Anomalie zu erkennen, wenn das Ergebnis ein Kriterium erfüllt, das eine Anomalie definiert. In die Berechnung des Kriteriums können weitere Parameter einfließen, insbesondere auch vorangegangene Abweichungen.

Im Beispiel ist die Auswahleinrichtung 304 ausgebildet, die erste Eingangsgröße vx für einen ersten Zeitschritt t auszuwählen. Der Ausgabebereich O ist in diesem Beispiel ausgebildet, abhängig von der ersten Eingangsgröße vx die Vorhersage v_{Y}'(t+1) für die zweite Eingangsgröße v_{Y}(t+1) zu bestimmen. Wenn auf eine Nachricht mit den Nachrichtentypen X eine Nachricht mit dem Nachrichtentyp Y folgt, wird im Beispiel mit Hilfe der ersten Eingangsgröße v_{X} eine Vorhersage für die Nachricht mit Nachrichtentyp Y, d.h. die Prädiktion v_{Y}' für die zweite Eingangsgröße v_{Y}(t+1) bestimmt. Die Vergleichseinrichtung 308 ist in diesem Beispiel ausgebildet, abhängig von einem Ergebnis eines Vergleichs von der zweiten Eingangsgröße v_{Y}(t+1) und der Vorhersage v_{Y}'(t+1) eine Anomalie zu erkennen, wenn das Ergebnis ein Kriterium erfüllt, das eine Anomalie definiert. Das Ergebnis ist beispielsweise abhängig von einem Maß für eine Abweichung der Vorhersage v_{Y}'(t+1) von der zweiten Eingangsgröße v_{Y}(t+1) definiert. Das Kriterium ist beispielsweise durch einen Schwellwert für die Abweichung definiert. Eine Anomalie wird in diesem Beispiel erkannt, wenn das Maß für die Abweichung den Schwellwert überschreitet.

Das künstliche neuronale Netzwerk 306 kann in einem anderen Aspekt trainiert sein, abhängig von zumindest einem Teil eines Netzwerkverkehrs im Kommunikationsnetzwerk 108 zu entscheiden, in welchen Zustand von einer Vielzahl von möglichen Zuständen sich das Kommunikationsnetzwerk 108 mit gegenüber den anderen möglichen Zuständen höherer Wahrscheinlichkeit befindet. In diesem Fall betrifft die Vorhersage des Ausgangs-Bereichs diese Zustände.

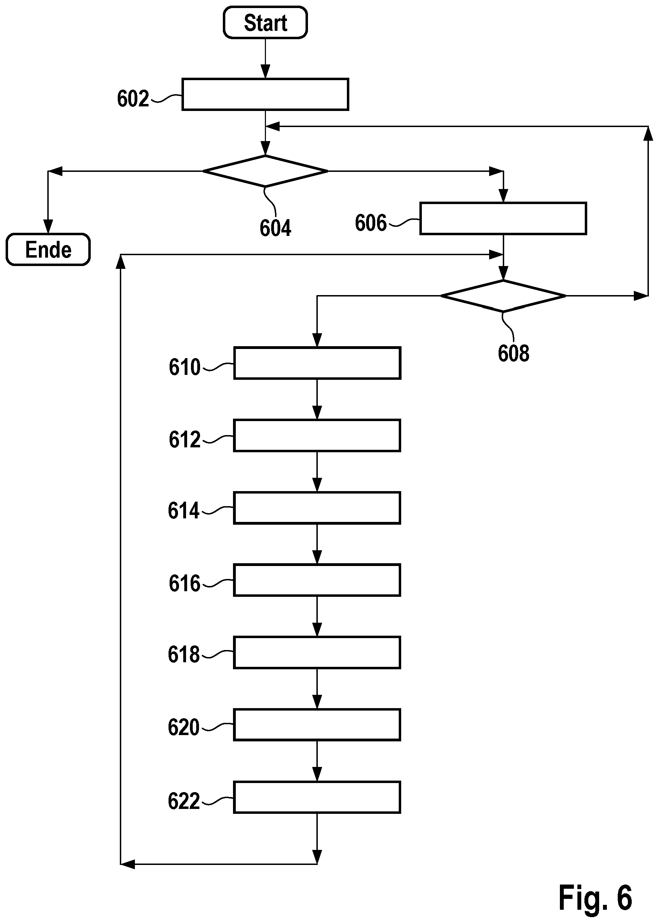

Auf dem nicht-flüchtigen Speicher 110 sind Instruktionen gespeichert, bei deren Ausführung durch den Prozessor 102 ein im Folgenden anhand der Figur 5 beschriebenes Verfahren zur Klassifizierung von Daten abläuft und/oder das anhand der Figur 6 beschriebene Verfahren zum Trainieren des künstlichen neuronalen Netzes 306 abläuft.

Im Folgenden wird ein Verfahren zur Evaluierung beschrieben. Liegt ein trainiertes Modell vor, kann dieses als IDS verwendet werden. Der Ablauf der Evaluierung zu jedem Zeitschritt kann wie folgt skizziert werden:
- Empfange die Nachricht des Nachrichtentyps X zum aktuellen Zeitschritt t.
- Generiere die Eingangsgröße vx(t).
- Berechne den Zustand s_{X} = I_{X}(v_{X}(t)).
- Führe die Aggregation aus, dies führt im Beispiel der einfachen Konkatenation auf den Vektor a = (s_{X1}, ..., s_{Xn}) (falls N = {X_{1,} ..., Xₙ}).
- Berechne alle Prädiktionen o_{Xi} = O_{Xi}(a) = v_{Xi}'(t + 1) für i ∈ {1, ... n}.
- Empfange Nachricht zum Zeitschritt t + 1 - im Beispiel sei dies Y - und berechne v_{Y} (t + 1).
- Bestimme einen Anomaliescore f = f (f(t); o_{Y}; v_{Y} (t + 1); *θ*(t)), wobei *θ*(t) weitere Parameter sein können, die in den Anomaliescore mit eingehen.

Je nach Anwendungsfall für das IDS kann es um Ressourcen zu sparen sinnvoll sein, nicht alle Prädiktionen o_{Xi} O_{Xi}(a) = v_{Xi}'(t + 1) für i ∈ {1, ... n} zu berechnen.

Anstatt dessen kann beim Zeitschritt t gewartet werden, bis Zeitschritt t+1 auftritt und somit der Nachrichtentyp zu diesem Zeitpunkt, so dass nur eine Auswertung einer Zielgröße nötig ist.

Dieses Modell ist verwendbar, um mit Hilfe des Ausgangs ox zu jedem Zeitschritt einen Anomaliescore f zu berechnen. Beispielhaft werden im Folgenden zwei Ansätze dargestellt. Der Anomaliescore ist problemspezifisch ansetzbar.

Eine erste Methode sieht vor, nur den aktuellen Prädiktionsfehler ex(t+1) = ∥ v_{X}(t+1) - o_{X}∥ in einer geeigneten Norm zu betrachten. Das bedeutet, der wahre Wert aus dem Netzwerkverkehr, d.h. die Eingangsgröße vx(t+1) wird mit der Prädiktion o_{X} verglichen.

Eine zweite demgegenüber besser geeignete Methode sieht vor, für jedes Xᵢ ∈ N einen Fehlerspeicher E mit Startwert 0 zu instanziieren. Jedes Mal, wenn im Netzwerkverkehr eine Nachricht von Nachrichtentyp Xᵢ auftritt, wird der zugehörige Fehlerspeicher E(i) mit dem aktuellen Fehlerwert e_{Xi} überschrieben.

Als Anomaliescore f dient eine optional gewichtete Summe der Fehlerwerte E(i).

Wenn verschiedene Datenkanäle unterschiedlich gut modelliert werden können, können zusätzlich statistische Ansätze in die Berechnung des Anomaliescores f mit einzubeziehen werden. So ist es beispielsweise möglich, basierend auf den Normaldaten die Verteilungen der Einzelfehler zu erlernen bzw. die Parameter der zugehörigen Verteilung zu schätzen. Bei der Berechnung des Anomaliescores f kann beispielsweise eingehen, wie wahrscheinlich bzgl. der berechneten Fehlerverteilung der aktuell beobachtete Fehler ist.

In Figur 5 sind Schritte eines computerimplementierten Verfahrens zur Klassifizierung von Daten insbesondere für das Controller Area Netzwerk oder das automotive Ethernet Netzwerk dargestellt. Dieses Verfahren ist einerseits im Verfahren zur Evaluierung einsetzbar. Andererseits könne auch andere Klassifizierungen damit durchgeführt werden.

In einem Schritt 502 wird eine Vielzahl Nachrichten aus dem Kommunikationsnetzwerk 108 empfangen. Beispielsweise sind die Nachrichten wie im CAN Trace dargestellt aufgebaut. Die Nachrichten müssen nicht vor dem Einspeisen in das Netz gesammelt werden - das künstliche neuronale Netz wird beispielsweise immer dann mit einer neuen Eingangsgrößen versehen, wenn ein relevanter Nachrichtentyp im Nachrichtenverlauf auftritt.

In einem Schritt 504 wird eine Nachricht der Vielzahl Nachrichten, die einen vorgegebenen Nachrichtentyp X, beispielsweise die CAN ID A aufweist, für die Eingangsgröße vx für das Eingabemodell Ix des künstliches neuronales Netzes 306 ausgewählt, das dem vorgegebenen Nachrichtentyp X zugeordnet ist. Genauer wird eine erste Eingangsgröße vx für einen ersten Zeitschritt t ausgewählt. Im Beispiel wird das der CAN ID A zugeordnete Eingangsmodell Ix gewählt.

In einem Schritt 506 wird die Eingangsgröße vx abhängig von der Nachricht bestimmt. Beispielsweise wird der Vektor aus zumindest einem Teil der Daten der Nachricht mit CAN ID A erzeugt.

Die Schritte 504 bis 506 werden im Beispiel für die Vielzahl Nachrichten der Nachrichtentypen Xi ausgeführt. Eine Vielzahl Nachrichten aus dem CAN-Trace wird abhängig von der Vielzahl vorgegebener Netzwerktypen Xi als Eingangsgröße für die Vielzahl Eingabemodelle I_{X1}, ..., I_{Xn} ausgewählt, wobei die Nachrichten eines bestimmten Nachrichtentyps für ein diesem Nachrichtentyp eindeutig zugeordnetes Eingangsmodell als Eingangsgröße ausgewählt werden.

In einem optionalen Schritt 508 werden Ausgaben, z.B. die Zustände s_{X1}, ... s_{Xn} der Vielzahl Eingabemodelle I_{X1}, ..., I_{Xn} als eine Eingabe s_{X1}, ... s_{Xn} für den Ausgabebereich O aggregiert. Im Beispiel werden die Zustände s_{X1}, ... s_{Xn} als Ausgaben der Vielzahl Eingabemodelle I_{X1}, ..., I_{Xn} zur Ausgabe a aggregiert. Die Aggregation erfolgt insbesondere durch Konkatenation der Zustände s_{X} auf den Vektor oder Tensor, der im Beispiel die Ausgabe a darstellt. Die zuvor beschriebene Aggregation insbesondere auch die Weiterverarbeitung kann zusätzlich oder alternative dazu vorgesehen sein.

In einem Schritt 510 wird im Ausgabebereich O des künstlichen neuronalen Netzes die Vorhersage v_{Y}'(t+1) für eine Klassifizierung der Nachricht abhängig von der Eingangsgröße vx(t) ausgegeben. Genauer wird abhängig von der ersten Eingangsgröße v_{X} eine Vorhersage v_{Y}'(t+1) für eine zweite Eingangsgröße v_{Y}(t+1) bestimmt. Im Beispiel werden die für die Vielzahl Nachrichtentypen Xi Vorhersagen aus der Vielzahl Ausgangsmodelle O_{X1}, ... O_{Xn} erzeugt.

Alternativ oder zusätzlich ist das künstliche neuronale Netzwerk trainiert, abhängig von zumindest einem Teil eines Netzwerkverkehrs im Kommunikationsnetzwerk zu entscheiden, in welchen Zustand von einer Vielzahl von möglichen Zuständen sich das Kommunikationsnetzwerk 108 mit gegenüber den anderen möglichen Zuständen höherer Wahrscheinlichkeit befindet. In diesem Fall wird in Schritt 510 im Ausgabebereich O ein Zustand des Kommunikationsnetzwerks 108 bestimmt.

In einem Schritt 512 wird abhängig von einem Ergebnis eines Vergleichs von der zweiten Eingangsgröße v_{Y}(t+1) und der Vorhersage v_{Y}'(t+1) eine Anomalie erkannt, wenn das Ergebnis ein Kriterium erfüllt, das eine Anomalie definiert.

Beispielsweise ist das Ergebnis abhängig vom Maß für die Abweichung der Vorhersage v_{Y}'(t+1) von der zweiten Eingangsgröße v_{Y}(t+1) definiert, wobei das Kriterium durch den Schwellwert für die Abweichung definiert ist. In diesem Fall wird eine Anomalie erkannt, wenn das Maß für die Abweichung den Schwellwert überschreitet.

Im Folgenden wird ein Trainingsverfahren für ein solches künstliches neuronales Netzwerk beschrieben. Der Einfachheit halber wird davon ausgegangen, dass die Vielzahl Eingabemodelle I_{X1}, ..., I_{Xn} durch einfache LSTMs realisiert sind, dass der Aggregationsbereich A die einzelnen Zustände s_{X1}, ... s_{Xn} einfach konkateniert und dass jedes der Vielzahl Ausgangsmodelle O_{X1}, ... O_{Xn} durch ein einfaches Fully-Connected künstliches neurales Netz realisiert ist.

Der im Folgenden beschriebene Trainingsprozess kann sehr leicht auf mögliche Variationen übertragen werden. Schematisch kann das Training wie in Figur 6 dargestellt folgenden Ablauf aufweisen:
- Setze in eine Schritt 602 einen aktuellen Loss L auf L = 0.
- Iteriere in einem Schritt 604 über eine vorgegebene Anzahl an Epochen oder bis ein insbesondere auf Validierungsdaten basierendes vorgegebenes Fehlermaß erreicht ist.

Selektiere in einem Schritt 606 den nächsten Trainingsdatenabschnitt T von k Zeitschritten.

Optional werden alle Hidden States aller der Vielzahl Eingabemodelle I_{X1}, ..., I_{Xn} zurück gesetzt.

In einem Schritt 608 wird geprüft, ob alle Trainingsdaten aus dem Trainingsdatenabschnitt T verwendet wurden. Falls noch Trainingsdaten aus dem Trainingsdatenabschnitt T vorhanden sind, wird ein Schritt 610 ausgeführt. Anderenfalls wird der Schritt 604 ausgeführt.

Im Schritt 610 wird überprüft, ob im aktuellen Zeitschritt t von T eine Nachricht mit Nachrichtentyp X auftritt. Wenn dies der Fall ist, wird eine erste Eingangsgröße vx(t) aus den Trainingsdaten bestimmt.

In einem Schritt 612 wird s_{X} = I_{X}(v_{X}(t)) berechnet.

In einem Schritt 614 wird die Aggregation ausgeführt. Dies führt im Beispiel der einfachen Konkatenation auf den Vektor a = (s_{X1}, ...; s_{Xn})^{t}, falls N = {X₁; ...;Xₙ}.

In einem Schritt 616 wird überprüft, ob Y der Nachrichtentyp zum Zeitschritt t + 1 ist. Dies ist im Training leicht anhand des CAN-Traces überprüfbar. Falls der Nachrichtentyp Y ist, wird o_{Y} = O_{Y} (a) = v_{Y}' (t + 1) berechnet.

In einem Schritt 618 wird eine zweite Eingangsgröße v_{Y} (t + 1) aus den Trainingsdaten bestimmt.

In einem Schritt 620 wird ein Fehlermaß F = F(v_{Y} (t + 1); o_{Y} ) bestimmt. Für das Fehlermaß F kann beispielsweise der Mean Squared Error gewählt werden, das Fehlermaß kann aber pro Nachrichtentyp separat und problemspezifisch angesetzt werden. Der berechnete Fehlerwert wird auf den aktuelle Loss L aufaddiert.

In einem Schritt 622 wird geprüft, ob eine vorgegebene Anzahl an Schritten erreicht wird. Falls dies der Fall ist, wird ein Backpropagation Schritt durchgeführt, werden die Parameter der künstlichen neuronalen Netze entsprechend der Optimierungsstrategie aktualisiert und der aktuelle Loss L = 0 gesetzt.

Anschließend wird der Schritt 608 ausgeführt.

Eine Variation des Trainingsprozesses sieht vor, dass die Vielzahl Eingabemodelle I_{X1}, ..., I_{Xn} über mehrere Zeitschritte Daten aggregieren, und optional vorverarbeiten bevor ein Auswertungsschritt stattfindet.

In einer Variation werden durch die Vielzahl Ausgangsmodelle O_{X1}, ... O_{Xn} mehrere Zeitschritte vorhergesagt.

In einer Variation des Trainingsprozesses kann auch eine Batchoptimierung erfolgen. Insbesondere können hierfür die Gradienten, die zur Berechnung der Adaption der Modelparameter berechnet werden, über mehrere Trainingsdatenschritte gemittelt werden, bevor ein Backpropagation-Schritt erfolgt

Je nach betrachtetem Problem kann es vorgesehen sein, einige der Nachrichtentypen nur im Eingangsbereich I, nicht aber im Ausgabebereich O zu verwenden oder umgekehrt.

Optional können die vorgestellte Netzwerkarchitektur sowie die vorgestellten Schemata für Training und Evaluierung leicht in der Form adaptiert werden, dass anstelle des Prädiktionsfehlers ein Rekonstruktionsfehler berechnet wird. Hierbei wird zu jedem Zeitschritt t anstelle der Vorhersagen v_{Y}'(t+1) versucht, alle möglichen Eingaben vx(t) zu rekonstruieren. Die Rekonstruktion einer Eingangsgröße ist für eine Klassifizierung der Nachricht abhängig von dieser Eingangsgröße verwendbar. Diese Rekonstruktion ist im Folgenden mit wx(t) bezeichnet. Die Abweichung zwischen wahrer Eingabe vx(t) und Rekonstruktion wx(t) dient im Beispiel dazu, das neuronale Netzwerk zu trainieren, und in der Evaluierungsphase eine Anomalie zu erkennen.

Die Rekonstruktion wx(t) der Eingangsgröße vx(t), die ausgegeben wird, ist für die Klassifizierung der Nachricht abhängig von dieser Eingangsgröße vx(t) analog zum Schritt 616 verwendbar. Ein Fehlermaß F = F(v_{X} (t); wₓ(t) wird dazu abhängig von der ersten Eingangsgröße vx (t) und der Rekonstruktion wₓ(t) analog zum Schritt 620 bestimmt. Ein Backpropagation Schritt wird analog zu Schritt 618 durchgeführt, wobei Parameter des künstlichen neuronalen Netzes entsprechend der Optimierungsstrategie abhängig vom Fehlermaß F bestimmt werden. Die übrigen Schritte 602 bis 614 und 622 erfolgen beispielsweise wie für die Vorhersage beschrieben.

Die hier vorgestellten Schemata für Evaluierung und Training werden dazu entsprechend adaptieren. Insbesondere wird die Netzwerkarchitektur gemäß eines Autoencoder-Ansatzes adaptiert, indem nur ein einziges Ausgabemodel erzeugt wird, dass alle Rekonstruktionen als Vektor konkateniert ausgibt. Insbesondere wird hierzu im Ausgabemodel ein Layer verwendet, dessen Dimension kleiner ist als die der Ausgabe O.

Vorzugsweise ist vorgesehen, dass das Training unüberwacht, insbesondere nur mittels Daten erfolgt, die ein Normalverhalten des Kommunikationsnetzwerks 108 definieren. Das Intrusion Detection System wird nur durch Daten konfiguriert, die das Normalverhalten beschreiben.

Im Verfahren zur Klassifikation werden Abweichungen von diesem Normalverhalten als Angriff klassifiziert. Dadurch ist das System in der Lage, auch unbekannte Attacken zu detektieren.

## Patentansprüche

1. Computerimplementiertes Verfahren zur Anomalieerkennung, insbesondere für ein Controller Area Netzwerk oder ein automotive Ethernet Netzwerk, wobei eine Vielzahl Nachrichten aus einem Kommunikationsnetzwerk empfangen wird (502), **dadurch gekennzeichnet, dass** eine Nachricht, die einen vorgegebenen Nachrichtentyp aufweist, für eine erste Eingangsgröße (v_{X}(t)) für ein Eingabemodell (I_{X}) einer Vielzahl Eingabemodelle (I_{X1}, ..., I_{Xn}) eines künstlichen neuronalen Netzes für einen ersten Zeitschritt (t) ausgewählt wird (504), das dem vorgegebenen Nachrichtentyp zugeordnet ist, wobei die erste Eingangsgröße (vx(t)) abhängig von der Nachricht bestimmt wird (506), wobei in einem Ausgabebereich (O) des künstlichen neuronalen Netzes eine Vorhersage für eine zweite Eingangsgröße ausgegeben wird (510), wobei die Vorhersage abhängig von der ersten Eingangsgröße (vx(t)) bestimmt wird, wobei die Vorhersage für eine Klassifizierung der Nachricht abhängig von der ersten Eingangsgröße (vx(t)) verwendbar ist, wobei abhängig von einem Ergebnis eines Vergleichs (512) von der zweiten Eingangsgröße und der Vorhersage eine Anomalie erkannt wird (512), wenn das Ergebnis ein Kriterium erfüllt, das eine Anomalie definiert.

2. Computerimplementiertes Verfahren nach Anspruch 1, **dadurch gekennzeichnet, dass** das künstliche neuronale Netzwerk trainiert ist, abhängig von zumindest einem Teil eines Netzwerkverkehrs im Kommunikationsnetzwerk zu ermöglichen, zu entscheiden, in welchen Zustand von einer Vielzahl von möglichen Zuständen sich das Kommunikationsnetzwerk mit gegenüber den anderen möglichen Zuständen höherer Wahrscheinlichkeit befindet.

3. Computerimplementiertes Verfahren nach einem der vorherigen Ansprüche, **dadurch gekennzeichnet, dass** eine Vielzahl Nachrichten abhängig von einer Vielzahl vorgegebener Netzwerktypen als Eingangsgröße für eine Vielzahl Eingabemodelle (Iₓ) ausgewählt werden (504), wobei ein Nachrichtentyp eindeutig eines der Vielzahl Eingabemodelle (I_{X}) zugeordnet ist, wobei Ausgaben der Vielzahl Eingabemodelle (Iₓ) als eine Eingabe für den Ausgabebereich (O) aggregiert werden (508).

4. Computerimplementiertes Verfahren nach Anspruch 3, **dadurch gekennzeichnet, dass** die Vielzahl Eingabemodelle (Iₓ) als rekurrente künstliche neuronale Netze realisiert sind.

5. Computerimplementiertes Verfahren nach Anspruch 3 oder 4, **dadurch gekennzeichnet, dass** Zustände (s_{X}) der Vielzahl Eingabemodelle (Iₓ) aggregiert werden, insbesondere durch Konkatenation der Zustände (s_{X}) auf einen Vektor oder Tensor (a).

6. Computerimplementiertes Verfahren nach einem der vorherigen Ansprüche, **dadurch gekennzeichnet, dass** das Ergebnis abhängig von einem Maß für eine Abweichung der Vorhersage von der zweiten Eingangsgröße definiert ist, wobei das Kriterium durch einen Schwellwert für die Abweichung definiert ist, wobei eine Anomalie erkannt wird (512), wenn das Maß für die Abweichung den Schwellwert überschreitet.

7. Vorrichtung zur Anomalieerkennung in einem Kommunikationsnetzwerk, insbesondere für ein Controller Area Netzwerk oder ein automotive Ethernet Netzwerk, wobei die Vorrichtung ein künstliches neuronales Netz umfasst, dadruch gekennzeichnet, dass das künstliche neuronale Netz ein Eingabemodell (I_{X}) für eine erste Eingangsgröße (vx(t)) für einen ersten Zeitschritt (t) und einen Ausgabebereich (O) umfasst, wobei die Vorrichtung eine Auswahleinrichtung (304) umfasst, die ausgebildet ist, eine Nachricht aus dem Kommunikationsnetzwerk, die einen vorgegebenen Nachrichtentyp aufweist, für die erste Eingangsgröße (vx(t)) auszuwählen, und wobei der Ausgabebereich (O) ausgebildet ist, eine Vorhersage für eine zweite Eingangsgröße auszugeben, wobei der Ausgabebereich (O) ausgebildet ist, die Vorhersage für die zweite Eingangsgröße abhängig von der ersten Eingangsgröße zu bestimmen, wobei die Vorhersage für eine Klassifizierung der Nachricht abhängig von der ersten Eingangsgröße (vx(t)) verwendbar ist, wobei eine Vergleichseinrichtung (308) ausgebildet ist, abhängig von einem Ergebnis eines Vergleichs von der zweiten Eingangsgröße und der Vorhersage eine Anomalie zu erkennen, wenn das Ergebnis ein Kriterium erfüllt, das eine Anomalie definiert.

8. Vorrichtung nach Anspruch 7, **dadurch gekennzeichnet, dass** das künstliche neuronale Netzwerk trainiert ist, abhängig von zumindest einem Teil eines Netzwerkverkehrs im Kommunikationsnetzwerk zu ermöglichen, zu entscheiden, in welchen Zustand von einer Vielzahl von möglichen Zuständen sich das Kommunikationsnetzwerk mit gegenüber den anderen möglichen Zuständen höherer Wahrscheinlichkeit befindet.

9. Vorrichtung nach einem Ansprüche 7 oder 8, **dadurch gekennzeichnet, dass** die Vorrichtung eine Vielzahl Eingabemodelle (Iₓ) umfasst, wobei zwischen der Vielzahl Eingabemodelle (Iₓ) und dem Ausgabebereich (O) ein insbesondere als künstliches neuronales Netz ausgebildeter Aggregationsteil (A) angeordnet ist, der ausgebildet ist, Ausgaben der Vielzahl Eingabemodelle (Iₓ) als eine Eingabe für den Ausgabebereich (O) zu aggregieren.

10. Vorrichtung nach Anspruch 9, **dadurch gekennzeichnet, dass** die Vielzahl Eingabemodelle (Iₓ) als rekurrente künstliche neuronale Netze realisiert sind.

11. Vorrichtung nach Anspruch 9 oder 10, **dadurch gekennzeichnet, dass** der Aggregationsteil (A) ausgebildet ist, Zustände (s_{X}) der Vielzahl Eingabemodelle (Iₓ) zu aggregieren, insbesondere durch Konkatenation der Zustände (s_{X}) auf einen Vektor (a).

12. Vorrichtung nach einem der Ansprüche 7 bis 11, **dadurch gekennzeichnet, dass** das Ergebnis abhängig von einem Maß für eine Abweichung der Vorhersage von der zweiten Eingangsgröße definiert ist, wobei das Kriterium durch einen Schwellwert für die Abweichung definiert ist, wobei die Vorrichtung ausgebildet ist, eine Anomalie zu erkennen, wenn das Maß für die Abweichung den Schwellwert überschreitet.

13. Computerprogramm, **gekennzeichnet durch** computerlesbare Instruktionen, bei deren Ausführung durch einen Computer das Verfahren nach einem der Ansprüche 1 bis 6 abläuft.

14. Computerprogrammprodukt, **gekennzeichnet durch** einen computerlesbaren Speicher, auf dem eine Computerprogramm nach Anspruch 13 gespeichert ist.

## Claims

1. Computer-implemented method for detecting anomalies, in particular for a controller area network or an automotive Ethernet network, wherein a multiplicity of messages are received (502) from a communication network, **characterized in that** a message having a predefined message type is selected (504) for a first time step (t) for a first input variable (vₓ(t)) for an input model (lₓ) of a multiplicity of input models (lₓ₁, ..., lₓₙ) of an artificial neural network assigned to the predefined message type, wherein the first input variable (vₓ(t)) is determined (506) on the basis of the message, wherein a prediction for a second input variable is output (510) in an output area (O) of the artificial neural network, wherein the prediction is determined on the basis of the first input variable (vₓ(t)), wherein the prediction can be used to classify the message on the basis of the first input variable (vₓ(t)), wherein, depending on a result of a comparison (512) of the second input variable and the prediction, an anomaly is detected (512) if the result satisfies a criterion defining an anomaly.

2. Computer-implemented method according to Claim 1, **characterized in that** the artificial neural network is trained to make it possible to decide, on the basis of at least some of the network traffic in the communication network, in which state of a multiplicity of possible states the communication network is more likely to be in comparison with the other possible states.

3. Computer-implemented method according to one of the preceding claims, **characterized in that** a multiplicity of messages are selected (504) as an input variable for a multiplicity of input models (lₓ) on the basis of a multiplicity of predefined network types, wherein a message type is uniquely assigned to one of the multiplicity of input models (lₓ), wherein outputs from the multiplicity of input models (lₓ) are aggregated (508) as an input for the output area (O).

4. Computer-implemented method according to Claim 3, **characterized in that** the multiplicity of input models (lₓ) are implemented as recurrent artificial neural networks.

5. Computer-implemented method according to Claim 3 or 4, **characterized in that** states (sₓ) of the multiplicity of input models (lₓ) are aggregated, in particular by concatenating the states (sₓ) to a vector or tensor (a).

6. Computer-implemented method according to one of the preceding claims, **characterized in that** the result is defined on the basis of a measure of a deviation of the prediction from the second input variable, wherein the criterion is defined by a threshold value for the deviation, wherein an anomaly is detected (512) if the measure of the deviation exceeds the threshold value.

7. Apparatus for detecting anomalies in a communication network, in particular for a controller area network or an automotive Ethernet network, wherein the apparatus comprises an artificial neural network, **characterized in that** the artificial neural network comprises an input model (lₓ) for a first input variable (vₓ(t)) for a first time step (t) and an output area (O), wherein the apparatus comprises a selection device (304) which is designed to select a message having a predefined message type from the communication network for the first input variable (vₓ(t)), and wherein the output area (O) is designed to output a prediction for a second input variable, wherein the output area (O) is designed to determine the prediction for the second input variable on the basis of the first input variable, wherein the prediction can be used to classify the message on the basis of the first input variable (vₓ(t)), wherein a comparison device (308) is designed, depending on a result of a comparison of the second input variable and the prediction, to detect an anomaly if the result satisfies a criterion defining an anomaly.

8. Apparatus according to Claim 7, **characterized in that** the artificial neural network is trained to make it possible to decide, on the basis of at least some of the network traffic in the communication network, in which state of a multiplicity of possible states the communication network is more likely to be in comparison with the other possible states.

9. Apparatus according to either of Claims 7 and 8, **characterized in that** the apparatus comprises a multiplicity of input models (lₓ), wherein an aggregation part (A) which is in the form in particular of an artificial neural network and is designed to aggregate outputs from the multiplicity of input models (lₓ) as an input for the output area (O) is arranged between the multiplicity of input models (lₓ) and the output area (O).

10. Apparatus according to Claim 9, **characterized in that** the multiplicity of input models (lₓ) are implemented as recurrent artificial neural networks.

11. Apparatus according to Claim 9 or 10, **characterized in that** the aggregation part (A) is designed to aggregate states (sₓ) of the multiplicity of input models (lₓ), in particular by concatenating the states (sₓ) to a vector (a) .

12. Apparatus according to one of Claims 7 to 11, **characterized in that** the result is defined on the basis of a measure of a deviation of the prediction from the second input variable, wherein the criterion is defined by a threshold value for the deviation, wherein the apparatus is designed to detect an anomaly if the measure of the deviation exceeds the threshold value.

13. Computer program, **characterized by** computer-readable instructions, during the execution of which by a computer the method according to one of Claims 1 to 6 takes place.

14. Computer program product, **characterized by** a computer-readable memory in which a computer program according to Claim 13 is stored.

## Revendications

1. Procédé mis en œuvre par ordinateur, destiné à la reconnaissance d'anomalies, notamment pour un réseau local de commande ou un réseau Ethernet d'automobile, une pluralité de messages en provenance d'un réseau de communication étant reçus (502), **caractérisé en ce qu'**un message, qui possède un type de message prédéfini, pour une première grandeur d'entrée (Vₓ(t)) pour un modèle de saisie (lₓ) d'une pluralité de modèles de saisie (lₓ₁, ..., lₓₙ) d'un réseau neuronal artificiel est sélectionné (504) pour un premier stade temporel (t) qui est associé au type de message prédéfini, la première grandeur d'entrée (vₓ(t)) étant déterminée (506) en fonction du message, une prévision pour une deuxième grandeur d'entrée étant délivrée (510) dans une zone de sortie (O) du réseau neuronal artificiel, la prévision étant déterminée en fonction de la première grandeur d'entrée (vₓ(t)), la prévision pouvant être utilisée pour une classification du message en fonction de la première grandeur d'entrée (vₓ(t)), une anomalie étant reconnue (512) en fonction d'un résultat d'une comparaison (512) de la deuxième grandeur d'entrée et de la prévision, lorsque le résultat répond à un critère qui définit une anomalie.

2. Procédé mis en œuvre par ordinateur selon la revendication 1, **caractérisé en ce que** le réseau neuronal artificiel est entraîné pour rendre possible, en fonction d'au moins une partie d'un trafic réseau dans le réseau de communication, de décider dans quel état, parmi une pluralité d'états possibles, se trouve le réseau de communication avec la probabilité la plus élevée par rapport aux autres états possibles.

3. Procédé mis en œuvre par ordinateur selon l'une des revendications précédentes, **caractérisé en ce qu'**une pluralité de messages sont sélectionnés (504) en tant que grandeur d'entrée pour une pluralité de modèles de saisie (lₓ) en fonction d'une pluralité de types de réseaux prédéfinis, un type de message étant associé de manière univoque à l'un de la pluralité de modèles de saisie (lₓ), les sorties de la pluralité de modèles de saisie (lₓ) étant agrégées (508) comme une saisie unique pour la zone de sortie (O).

4. Procédé mis en oeuvre par ordinateur selon la revendication 3, **caractérisé en ce que** la pluralité de modèles de saisie (lₓ) sont réalisés sous la forme de réseaux neuronaux artificiels récurrents.

5. Procédé mis en oeuvre par ordinateur selon la revendication 3 ou 4, **caractérisé en ce que** les états (sₓ) de la pluralité de modèles de saisie (lₓ) sont agrégés, notamment par concaténation des états (sₓ) sur un vecteur ou un tenseur (a).

6. Procédé mis en oeuvre par ordinateur selon l'une des revendications précédentes, **caractérisé en ce que** le résultat est défini en fonction d'une mesure d'un écart de la prévision par rapport à la deuxième grandeur d'entrée, le critère étant défini par une valeur de seuil pour l'écart, une anomalie étant reconnue (512) lorsque la mesure de l'écart est supérieure à la valeur de seuil.

7. Arrangement de reconnaissance d'anomalies dans un réseau de communication, notamment pour un réseau local de commande ou un réseau Ethernet d'automobile, l'arrangement comportant un réseau neuronal artificiel, **caractérisé en ce que** le réseau neuronal artificiel comporte un modèle de saisie (lₓ) pour une première grandeur d'entrée (vₓ(t)) pour un premier stade temporel (t) et une zone de sortie (O), l'arrangement comportant un dispositif de sélection (304) qui est configuré pour sélectionner un message en provenance du réseau de communication, lequel possède un type de message prédéfini, pour la première grandeur d'entrée (vₓ(t)), et la zone de sortie (O) étant configurée pour délivrer en sortie une prévision pour une deuxième grandeur d'entrée, la zone de sortie (O) étant configurée pour déterminer la prévision pour la deuxième grandeur d'entrée en fonction de la première grandeur d'entrée, la prévision pouvant être utilisée pour une classification du message en fonction de la première grandeur d'entrée (vₓ(t)), un dispositif de comparaison (308) étant configuré pour reconnaître une anomalie en fonction d'un résultat d'une comparaison de la deuxième grandeur d'entrée et de la prévision, lorsque le résultat répond à un critère qui définit une anomalie.

8. Arrangement selon la revendication 7, **caractérisé en ce que** le réseau neuronal artificiel est entraîné pour rendre possible, en fonction d'au moins une partie d'un trafic réseau dans le réseau de communication, de décider dans quel état, parmi une pluralité d'états possibles, se trouve le réseau de communication avec la probabilité la plus élevée par rapport aux autres états possibles.

9. Arrangement selon l'une des revendications 7 et 8, **caractérisé en ce que** l'arrangement comporte une pluralité de modèles de saisie (lₓ), entre la pluralité de modèles de saisie (lx) et la zone de sortie (O) étant disposée une partie d'agrégation (A), notamment réalisée sous la forme de réseau neuronal artificiel, laquelle est configurée pour agréger les sorties de la pluralité de modèles de saisie (lₓ) comme une saisie unique pour la zone de sortie (O).

10. Arrangement la revendication 9, **caractérisé en ce que** la pluralité de modèles de saisie (lₓ) sont réalisés sous la forme de réseaux neuronaux artificiels récurrents.

11. Arrangement selon la revendication 9 ou 10, **caractérisé en ce que** la partie d'agrégation (A) est configurée pour agréger les états (sₓ) de la pluralité de modèles de saisie (lₓ), notamment par concaténation des états (sₓ) sur un vecteur (a).

12. Arrangement selon l'une des revendications 7 à 11, **caractérisé en ce que** le résultat est défini en fonction d'une mesure d'un écart de la prévision par rapport à la deuxième grandeur d'entrée, le critère étant défini par une valeur de seuil pour l'écart, l'arrangement étant configuré pour reconnaître une anomalie lorsque la mesure de l'écart est supérieure à la valeur de seuil.

13. Programme informatique, **caractérisé par** des instructions lisibles par ordinateur, dont l'exécution par un ordinateur met en œuvre le procédé selon l'une des revendications 1 à 6.

14. Produit de programme informatique, **caractérisé par** une mémoire lisible par ordinateur, sur laquelle est enregistré un programme informatique selon la revendication 13.
